# DEMANDE DE BREVET EUROPEEN

(11) **EP 2 503 259 A1**
(43) Date de publication de la demande: **26.09.2012**
(21) Numéro de dépôt: 11159638.3
(22) Date de dépôt: 24.03.2011
(51) Int. Cl.: F24J 2/04, F24J 2/52

(54) **Installation de panneaux solaires et procédé de montage d'une telle installation sur une surface d'une bâtisse**

(71) Demandeur: Belenos Clean Power Holding AG, 2502 Bienne (CH)
(72) Inventeur: Nguyen, Phuc, 1745, Lentigny (CH)
(74) Mandataire: Couillard, Yann Luc Raymond

(57) **Abrégé**

Procédé de fixation d'au moins un panneau solaire (8) sur une toiture (1) d'une habitation, ce procédé comprenant les étapes consistant à:
- se munir d'une bande de fixation (10);
- retirer une tuile (2) de la toiture (1) à l'endroit où l'on souhaite fixer la bande de fixation (10);
- fixer une première extrémité (12) de la bande de fixation (10) à un linteau (4) de la charpente de la toiture (1);
- remettre la tuile (2) en place par-dessus la bande de fixation (10), la longueur de la bande de fixation (10) étant telle que l'on peut ensuite la recourber pour la faire revenir au-dessus de la tuile (2);
- poser le panneau solaire (8) sur la tuile (2);
- enfiler une seconde extrémité libre (16) de la bande de fixation (10) dans une fente (20) du panneau solaire (8) prévue à cet effet;
- recourber la seconde extrémité libre (16) de la bande de fixation (10) par-dessus le panneau solaire (8) pour fixer le panneau solaire (8), et
- répéter, le cas échéant, les opérations ci-dessus autant de fois que l'on souhaite installer des bandes de fixation (10).

L'invention concerne également une installation de panneaux solaires (8) obtenue par la mise en oeuvre du procédé ci-dessus.

## Description

La présente invention concerne un procédé de montage d'au moins un panneau solaire sur une surface d'une bâtisse. La présente invention concerne également une installation de panneaux solaires sur une surface d'une bâtisse obtenue par mise en oeuvre du procédé selon l'invention.

Il existe de nombreuses techniques pour le montage de panneaux solaires sur la toiture d'une habitation. Parmi ces techniques, l'une d'entre elles consiste à retirer les tuiles aux endroits où l'on souhaite installer les panneaux solaires. L'ouverture ainsi pratiquée dans la toiture doit tout d'abord être étanchéifiée, puis des châssis destinés au montage des panneaux solaires sont installés. Finalement, les panneaux solaires sont fixés sur les châssis. Toutes ces opérations sont longues et coûteuses. L'opération visant à rendre étanche l'ouverture pratiquée dans le toit doit en particulier être conduite avec le plus grand soin. Ces opérations requièrent également du matériel et un outillage spécifiques. Une autre technique consiste à fixer les panneaux solaires au moyen de chevilles qui passent à travers les tuiles et qui viennent se ficher dans les linteaux de la charpente de la toiture sur lesquels les tuiles sont accrochées. Cette seconde technique qui nécessite de devoir percer les tuiles pose d'importants problèmes d'étanchéité.

La présente invention a pour but de remédier aux problèmes susmentionnés ainsi qu'à d'autres encore en procurant une installation de panneaux solaires de même qu'un procédé de montage d'une telle installation sur une surface d'une bâtisse qui ne nuit pas à l'étanchéité de la bâtisse et qui nécessite des moyens simples et bon marché.

A cet effet, la présente invention concerne un procédé de fixation d'au moins un panneau solaire sur une surface d'une bâtisse, ce procédé comprenant les étapes consistant à:
- se munir d'une bande de fixation;
- retirer un élément de couverture de la surface de la bâtisse à l'endroit où l'on souhaite fixer la bande de fixation;
- fixer une première extrémité de la bande de fixation sur une structure porteuse de l'élément de couverture;
- remettre l'élément de couverture en place par-dessus la bande de fixation, la longueur de la bande de fixation étant telle que l'on peut ensuite la recourber pour la faire revenir au-dessus de l'élément de couverture;
- poser le panneau solaire sur l'élément de couverture;
- enfiler une seconde extrémité libre de la bande de fixation dans une ouverture du panneau solaire prévue à cet effet;
- recourber la seconde extrémité libre de la bande de fixation par-dessus le panneau solaire pour fixer le panneau solaire, et
- répéter, le cas échéant, les opérations ci-dessus autant de fois que l'on souhaite installer des bandes de fixation.

Selon une caractéristique complémentaire de l'invention, l'élément de couverture est une tuile qui recouvre la toiture d'une habitation et la structure porteuse est un linteau de la charpente de la toiture.

Grâce à ces caractéristiques, la présente invention procure un procédé de montage d'un panneau solaire sur la toiture d'une habitation qui ne nécessite qu'une simple bande de fixation pour fixer le panneau solaire sur la toiture. Après retrait provisoire de la tuile pour pouvoir fixer la bande de fixation dans un linteau de la charpente de la toiture, la tuile est remise en place et la bande de fixation est pliée de manière à passer par-dessus la tuile et à être engagée dans une ouverture prévue à cet effet dans le panneau solaire. Il n'est donc pas nécessaire de ménager une ouverture dans la toiture pour pouvoir installer le panneau solaire. Il n'est pas non plus nécessaire de percer ou de réaliser une quelconque autre opération sur les tuiles. Par conséquent, le procédé selon l'invention permet de fixer un panneau solaire sur la toiture d'une habitation sans affecter l'étanchéité de la toiture. En outre, le procédé selon l'invention peut être mis en oeuvre au moyen d'un outillage rudimentaire. Un marteau ou une visseuse sont en effet suffisants pour fixer les bandes de fixation dans les linteaux de la charpente de la toiture. Ainsi, le procédé de montage selon l'invention peut être mis en oeuvre de manière à la fois simple et rapide et est donc très économique.

La présente invention concerne également une installation d'au moins un panneau solaire fixé sur une surface d'une bâtisse, cette installation comprenant au moins une bande de fixation dont une première extrémité est fixée sur une structure porteuse d'un élément de couverture, l'élément de couverture recouvrant partiellement la bande de fixation, la bande de fixation étant recourbée par une seconde extrémité libre pour venir par-dessus l'élément de couverture, la seconde extrémité libre de la bande de fixation traversant ensuite une ouverture prévue à cet effet dans le panneau solaire posé sur l'élément de couverture et étant recourbée pour venir par-dessus le panneau solaire pour immobiliser ledit panneau solaire.

Enfin, la présente invention concerne une bande de fixation d'au moins un panneau solaire posé sur un élément de couverture d'une surface d'une bâtisse, cette bande de fixation comprenant des moyens pour sa fixation sur une structure porteuse de l'élément de couverture à l'endroit où est posé l'élément de couverture supportant le panneau solaire et étant déformable pour s'adapter au profil de l'élément de couverture qu'elle enveloppe partiellement et pour traverser une ouverture prévue à cet effet dans le panneau solaire afin de fixer ledit panneau solaire.

D'autres caractéristiques et avantages de la présente invention ressortiront plus clairement de la description détaillée qui suit d'un exemple de mise en ouvre du procédé selon l'invention, cet exemple étant donné à titre purement illustratif et non limitatif seulement en liaison avec le dessin annexé sur lequel:
- la figure 1 est une vue en perspective d'une toiture d'une habitation dans laquelle est dégagée une ouverture permettant la fixation d'une ou plusieurs bandes de fixation qui permettront ultérieurement de fixer un ou plusieurs panneaux solaires conformément à l'invention;
- la figure 2 est une vue en perspective d'une bande de fixation selon l'invention utilisée pour fixer un panneau solaire sur la toiture de l'habitation illustrée à la figure 1 ;
- la figure 3 montre schématiquement et en perspective des bandes de fixation taillées en forme de flèche et recourbées à 90° pour pouvoir être enfoncées dans les linteaux;
- la figure 4 est une vue en perspective d'une variante de réalisation d'une bande de fixation selon l'invention plus particulièrement destinée à être fixée sur des linteaux en acier;
- la figure 5 montre que les tuiles qui ont été préalablement retirées pour permettre la fixation des bandes de fixation sur les linteaux sont progressivement remises en place par-dessus les bandes de fixation;
- la figure 6 montre que la longueur des bandes de fixation est telle que l'on peut recourber les bandes de fixation pour faire revenir leur extrémité libre au-dessus des tuiles;
- la figure 7 est une vue en perspective de la toiture une fois que l'ensemble des tuiles a été remis en place, la seule modification apportée à la toiture résidant dans la présence des bandes de fixation dont les extrémités libres ont été recourbées par-dessus les tuiles;
- la figure 8 est une vue en perspective de la toiture sur laquelle des panneaux solaires ont été posés;
- la figure 9 est une vue à plus grande échelle de la zone entourée d'un cercle sur la figure 8;
- la figure 10 est une vue en coupe longitudinale suivant la ligne X-X de la figure 8 de trois tuiles qui se succèdent et qui se chevauchent partiellement dans le sens de la pente de la toiture ainsi que des bandes de fixation qui permettent le maintien des panneaux solaires sur la toiture.
- la figure 11 A est une vue à plus grande échelle de la zone entourée d'un cercle repéré par la référence 11A sur la figure 10;
- la figure 11B est une vue en perspective illustrant le profil de la bande de fixation représentée en coupe à la figure 11 A;
- la figure 11C est une vue de détail en perspective illustrant la fixation du panneau solaire au moyen d'une bande de fixation dans la zone correspondant à la vue en coupe de la figure 11 A;
- la figure 12A est une vue à plus grande échelle de la zone entourée d'un cercle repéré par la référence 12A sur la figure 10;
- la figure 12B est une vue en perspective illustrant le profil de la bande de fixation représentée en coupe à la figure 12A;
- la figure 12C est une vue de détail en perspective illustrant la fixation du panneau solaire au moyen d'une bande de fixation dans la zone correspondant à la vue en coupe de la figure 12A;
- la figure 13A est une vue à plus grande échelle de la zone entourée d'un cercle repéré par la référence 13A sur la figure 10;
- la figure 13B est une vue en perspective illustrant le profil de la bande de fixation représentée en coupe à la figure 13A;
- la figure 13C est une vue de détail en perspective illustrant la fixation du panneau solaire au moyen d'une bande de fixation dans la zone correspondant à la vue en coupe de la figure 13A;
- les figures 14A (i) à (iii) sont des vues analogues aux figures 11A, 12A et 13A qui illustrent le cas où deux fentes sont ménagées parallèlement et en regard l'une de l'autre dans le bord du panneau solaire pour renforcer la fixation du panneau solaire sur la toiture de l'habitation;
- la figure 14B est une vue de détail en perspective illustrant la fixation des panneaux solaires dans les zones correspondant aux vues en coupe des figures 14A(i) et (ii), et
- les figures 15 et 16 sont deux vues en perspective illustrant des variantes de réalisation de la bande de fixation.

La présente invention est partie du constat que l'installation de panneaux solaires sur la toiture d'une habitation nécessitait des opérations complexes et coûteuses qui en outre affectaient négativement l'étanchéité de la toiture. La présente invention procure donc un procédé de même qu'une installation de panneaux solaires sur la toiture d'une habitation qui ne nécessitent aucune modification de la toiture et qui font appel à des moyens de fixation ainsi qu'à un outillage extrêmement simples. L'étanchéité de la toiture n'est donc nullement affectée et les coûts de montage des panneaux solaires sont considérablement réduits.

La présente invention va être décrite en liaison avec des tuiles recouvrant la toiture d'une habitation et posées sur des linteaux de la charpente de la toiture. Il doit être bien compris que cet exemple de réalisation est donné à titre purement illustratif et non limitatif seulement et que la présente invention s'applique de manière identique à tout type d'élément posé sur une structure porteuse et couvrant une surface d'une bâtisse.

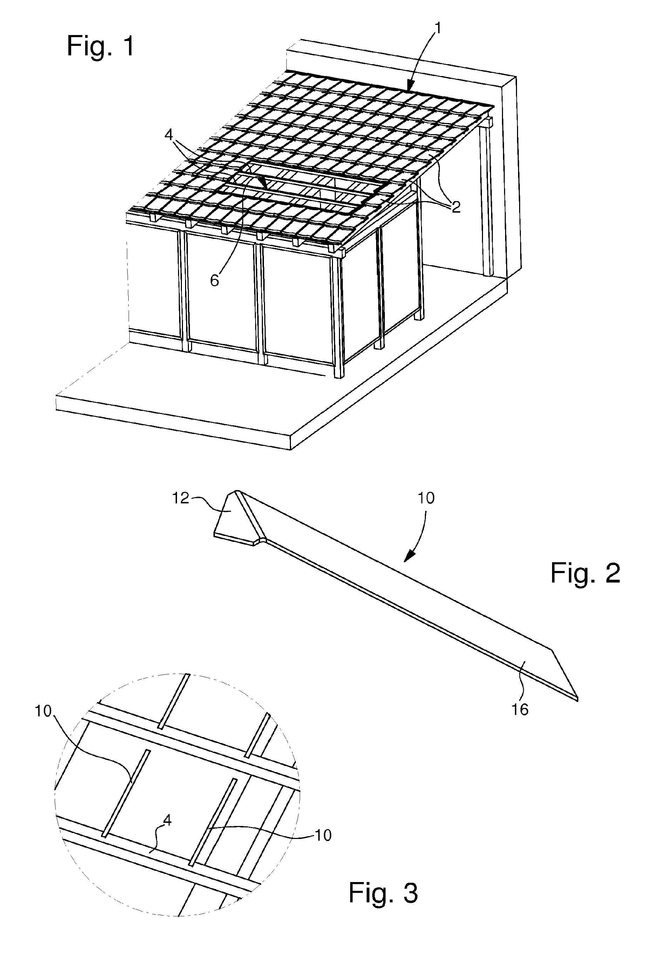

La figure 1 est une vue en perspective d'une toiture d'une habitation. Désignée dans son ensemble par la référence numérique générale 1, cette toiture se compose de tuiles 2 posées sur des linteaux 4 qui forment la charpente de la toiture 1. En retirant de la toiture 1 un certain nombre de tuiles 2, on dégage une ouverture 6 destinée à recevoir une ou plusieurs bandes de fixation 10 qui permettront de fixer les panneaux solaires 8 comme décrit en détail ci-après.

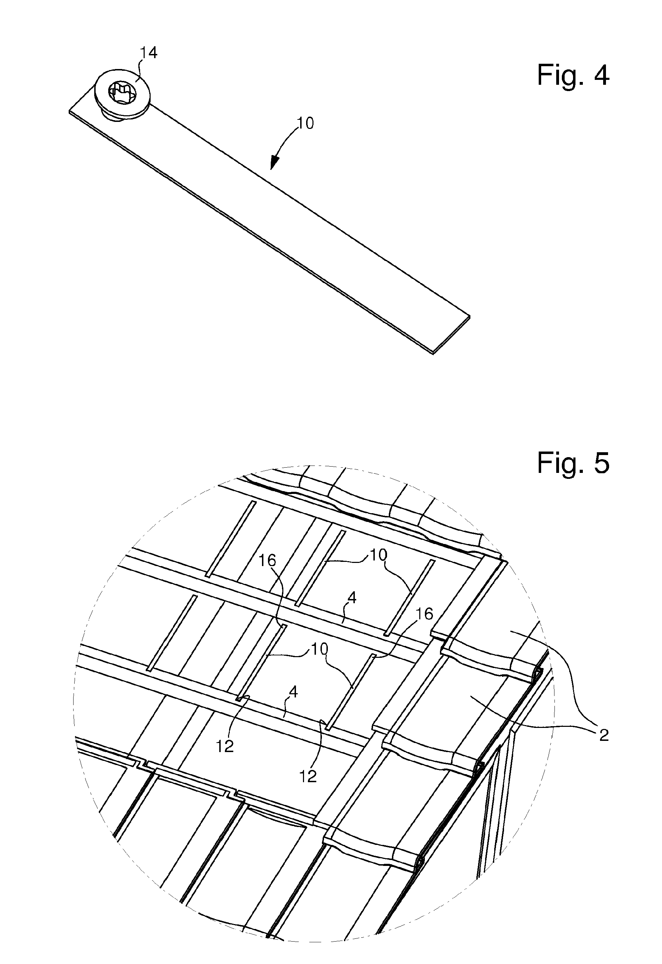

Conformément à l'invention (voir figure 2), on utilise des bandes de fixation 10. Préférentiellement, ces bandes de fixation 10 sont des bandes métalliques par exemple réalisées en acier inoxydable ou en acier galvanisé. Ces bandes de fixation 10 se présentent sous la forme de lames métalliques minces de forme rectangulaire beaucoup plus longues que larges. Dans le cas où les linteaux 4 sont en bois, on taille l'une des extrémités 12 des bandes de fixation 10 en forme de flèche et on recourbe ces extrémités sensiblement à 90° pour pouvoir ensuite les enfoncer dans les linteaux 4 par exemple au moyen d'un marteau (voir figure 3). Selon une variante illustrée à la figure 4, les bandes de fixation 10 peuvent être fixées directement aux linteaux 4 soit par chassage ou encore par vissage au moyen de vis 14. Ceci est particulièrement approprié dans le cas où les linteaux 4 sont métalliques. D'autres solutions encore d'immobilisation des bandes de fixation 10 par exemple au moyen de colliers de serrage ou de fil acier peuvent être envisagées. On notera que les bandes de fixation 10 sont orientées parallèlement à la pente de la toiture 1.

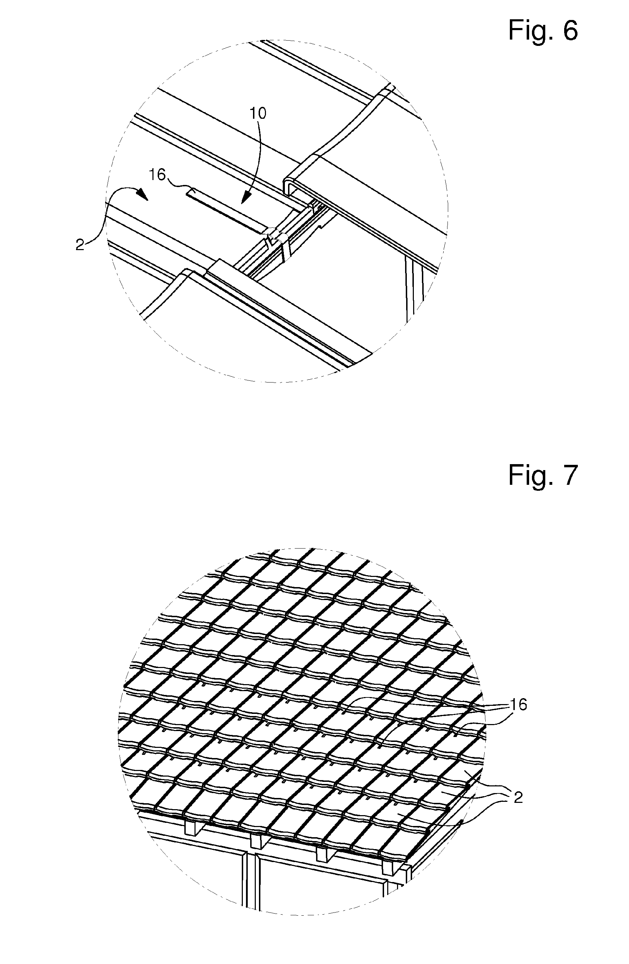

A la figure 5, on remet en place les tuiles 2 qui ont été préalablement retirées pour permettre la fixation des bandes de fixation 10 sur les linteaux 4. Les tuiles 2 sont remises en place par-dessus les bandes de fixation 10, la longueur de ces bandes de fixation 10 étant cependant telle que l'on peut ensuite recourber les bandes de fixation 10 pour faire revenir leur extrémité libre 16 au-dessus des tuiles 2 (voir figure 6).

La figure 7 est une vue en perspective de la toiture 1 une fois que l'ensemble des tuiles 2 a été remis en place. On remarquera que la seule modification apportée à la toiture 1 réside dans la présence des bandes de fixation 10 dont les extrémités libres 16 ont été recourbées par-dessus les tuiles 2. Par contre, aucune modification n'a été apportée à la structure de la toiture proprement dite ni à celle des tuiles. Par conséquent, l'étanchéité de la toiture n'a été nullement affectée par l'installation des bandes de fixation selon l'invention, ce qui permet d'éviter des travaux longs et coûteux et dont les résultats sont souvent incertains. En outre, comme on le verra en détail ci-dessous, l'installation des panneaux solaires sur la toiture de l'habitation ne nécessite aucune structure de réception des panneaux solaires particulière telle que des cadres, ce qui là encore simplifie considérablement la tâche et permet donc de réduire au strict minimum le temps et les frais de pose.

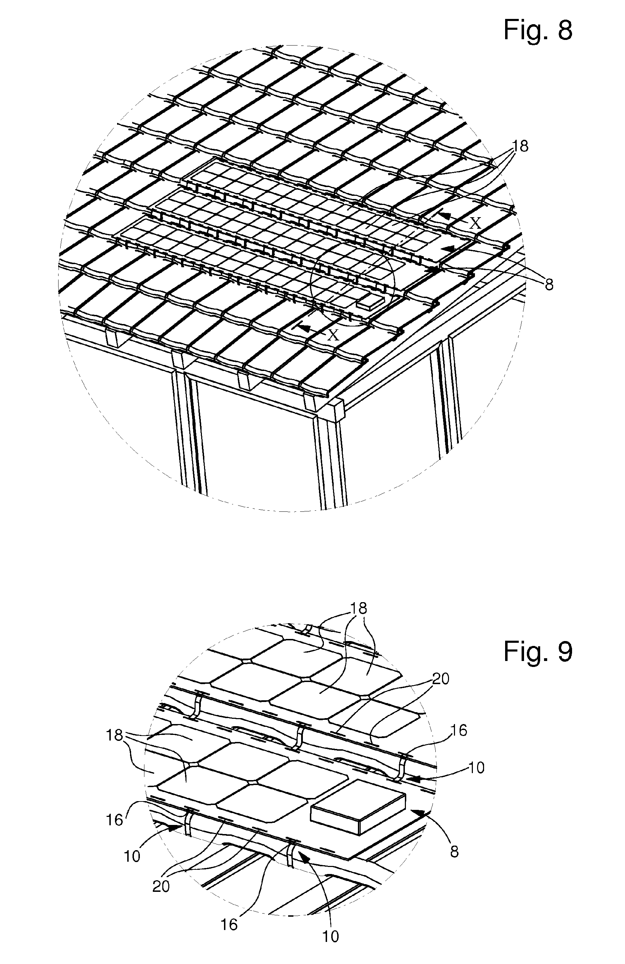

La figure 8 est une vue en perspective de la toiture 1 sur laquelle des panneaux solaires ont été posés et la figure 9 est une vue à plus grande échelle de la zone entourée d'un cercle sur la figure 8. Les panneaux solaires 8 sont de forme générale rectangulaire allongée et portent à leur surface une pluralité de cellules photovoltaïques 18. On comprend immédiatement à l'examen de ces deux figures que les extrémités libres 16 des bandes de fixation 10, après avoir été recourbées par-dessus les tuiles 2, sont engagées dans des fentes 20 pratiquées le long des bords longitudinaux des panneaux solaires 8 puis à nouveau recourbées par-dessus les panneaux solaires 8 pour la fixation de ces derniers.

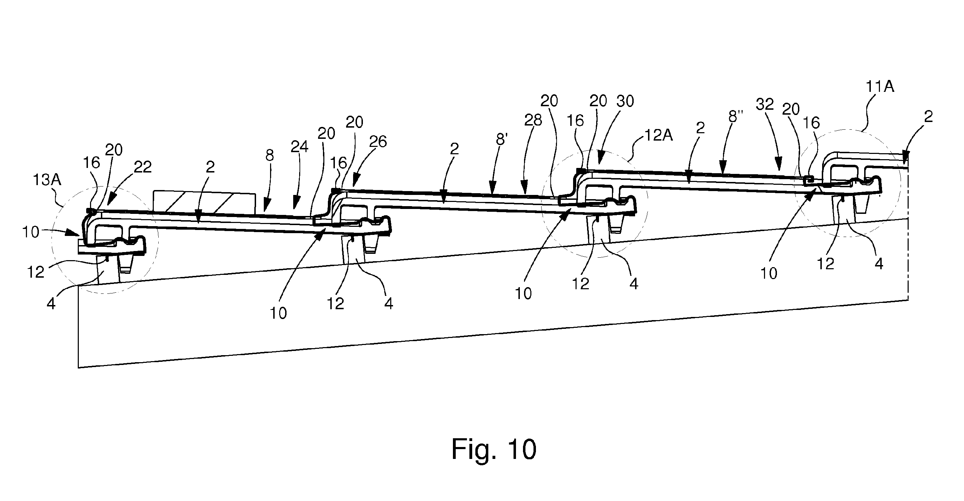

La figure 10 est une vue en coupe longitudinale suivant la ligne X-X de la figure 8 dans le sens de la pente de la toiture de trois tuiles qui se succèdent et qui se chevauchent partiellement ainsi que des bandes de fixation qui permettent le maintien des panneaux solaires sur la toiture.

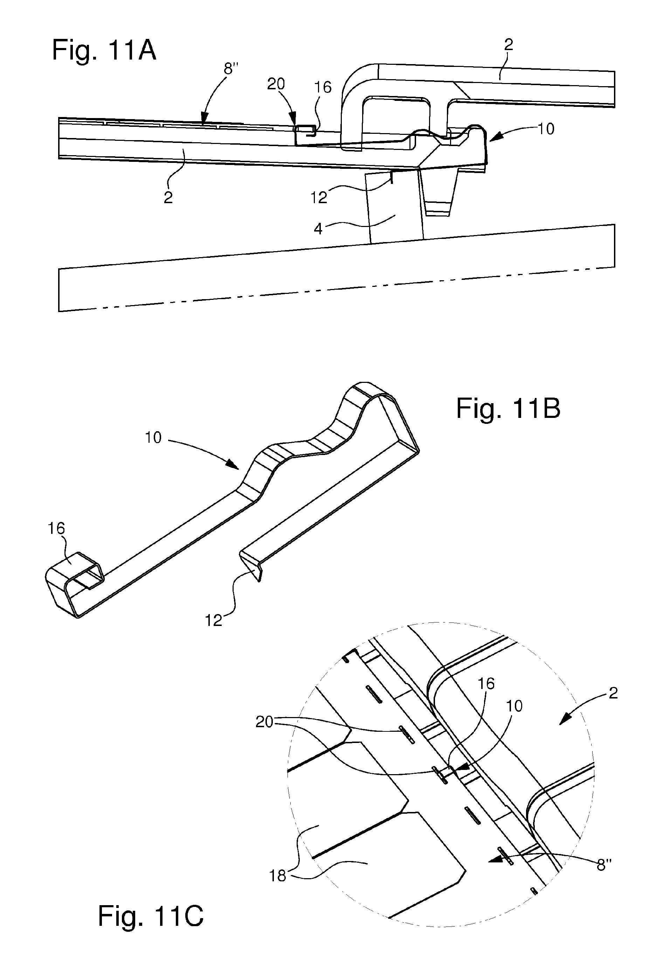

La figure 11A est une vue à plus grande échelle de la zone entourée d'un cercle repéré par la référence 11A sur la figure 10. La figure 11 B est une vue en perspective illustrant le profil de la bande de fixation représentée en coupe à la figure 11A. Enfin, la figure 11C est une vue de détail en perspective illustrant la fixation du panneau solaire au moyen d'une bande de fixation dans la zone correspondant à la vue en coupe de la figure 11A.

En liaison avec les figures 11A et 11 B, on voit que la bande de fixation 10 est taillée en pointe à l'une de ses extrémités 12 puis recourbée sensiblement à 90° pour pouvoir ensuite être enfoncée dans le linteau 4 par exemple au moyen d'un marteau. Une première tuile 2 est remise en place sur le linteau 4 par-dessus la bande de fixation 10. La longueur de la bande de fixation 10 est telle que l'on peut ensuite la recourber pour faire revenir son extrémité libre 16 au-dessus de la tuile 2. On appréciera en particulier à l'examen de la figure 11 B que la bande de fixation 10 est suffisamment déformable pour pouvoir épouser les creux et les reliefs de la tuile 2. Une fois la bande de fixation 10 passée par-dessus la tuile 2, sa seconde extrémité 16 qui est libre est enfilée dans une fente 20 prévue à cet effet dans le panneau solaire 8" posé sur la tuile 2. Finalement, la bande de fixation 10 est à nouveau recourbée par-dessus le panneau solaire 8" pour la fixation de ce dernier. Comme on le voit sur la figure 11C, des fentes 20 sont pratiquées de proche en proche le long de l'un des bords longitudinaux du panneau solaire 8" et l'opération de fixation de ce panneau solaire 8" au moyen d'une bande de fixation 10 est répétée à quelques fentes 20 de distance. On voit qu'une seconde tuile 2 est posée à chevauchement par-dessus la première tuile. On notera qu'à l'exception d'un marteau nécessaire pour enfoncer les bandes de fixation dans les linteaux, la présente invention ne nécessite aucun outillage particulier pour le montage des panneaux solaires sur les tuiles d'une toiture d'une habitation. En effet, les opérations qui consistent à plier les bandes de fixation et à les adapter au profil des tuiles peuvent être effectuées manuellement. En outre, selon un autre avantage de l'invention, l'étanchéité de la toiture n'est à aucun moment altérée. Il n'est pas nécessaire de percer les tuiles tout comme il n'est pas nécessaire de ménager un trou dans la toiture puis d'étanchéifier ce trou et de poser des cadres de fixation des panneaux solaires. La présente invention permet ainsi de réaliser des gains de temps et d'argent considérables.

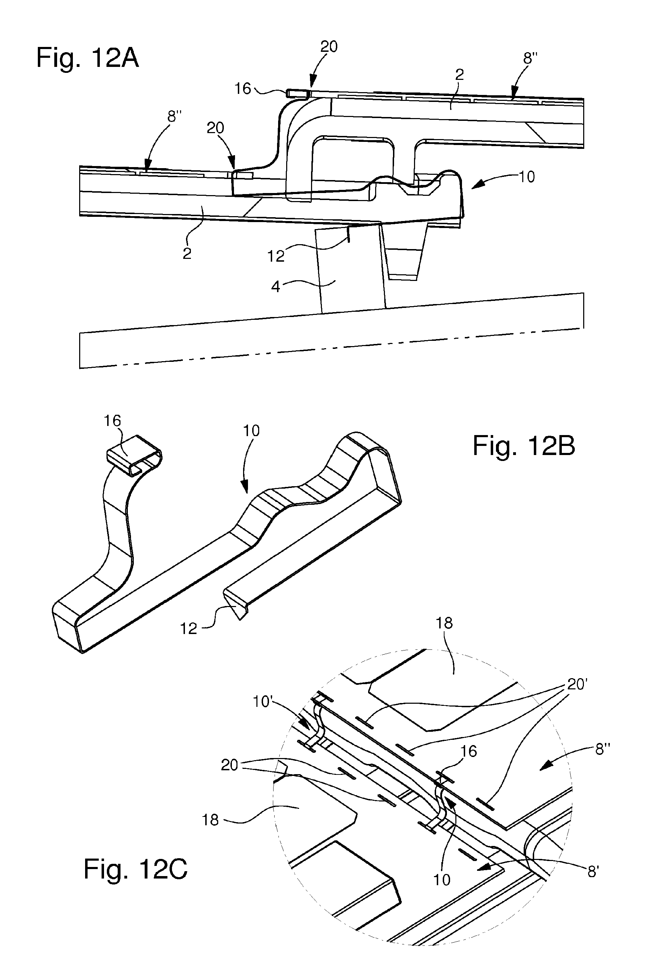

La figure 12A est une vue à plus grande échelle de la zone entourée d'un cercle repéré par la référence 12A sur la figure 10. La figure 12B est une vue en perspective illustrant le profil de la bande de fixation représentée en coupe à la figure 12A. Enfin, la figure 12C est une vue de détail en perspective illustrant la fixation du panneau solaire au moyen d'une bande de fixation dans la zone correspondant à la vue en coupe de la figure 12A.

A la figure 12A, une première tuile 2 est mise en place sur le linteau 4 et une seconde tuile est disposée par-dessus la première tuile 2, chevauchant partiellement la première tuile 2. La bande de fixation 10 est taillée en pointe à l'une de ses extrémités 12 puis recourbée sensiblement à 90° et enfoncée dans le linteau 4. La longueur de la bande de fixation 10 est telle qu'elle peut être recourbée par-dessus la première tuile 2 puis être enfilée dans une fente 20 prévue à cet effet dans un premier panneau solaire 8' posé sur la première tuile 2. La bande de fixation 10 est à nouveau recourbée par-dessus le premier panneau solaire 8' pour la fixation de ce dernier puis est enfilée par son extrémité libre 16 dans une fente 20 prévue à cet effet dans un second panneau solaire 8" posé sur la seconde tuile. L'opération est renouvelée à quelques fentes de distance avec une deuxième bande de fixation 10' (voir figure 12C). Ainsi, en choisissant judicieusement la longueur de la bande de fixation, il est possible, au moyen d'une même bande de fixation, de fixer deux panneaux solaires posés sur deux tuiles adjacentes qui se chevauchent.

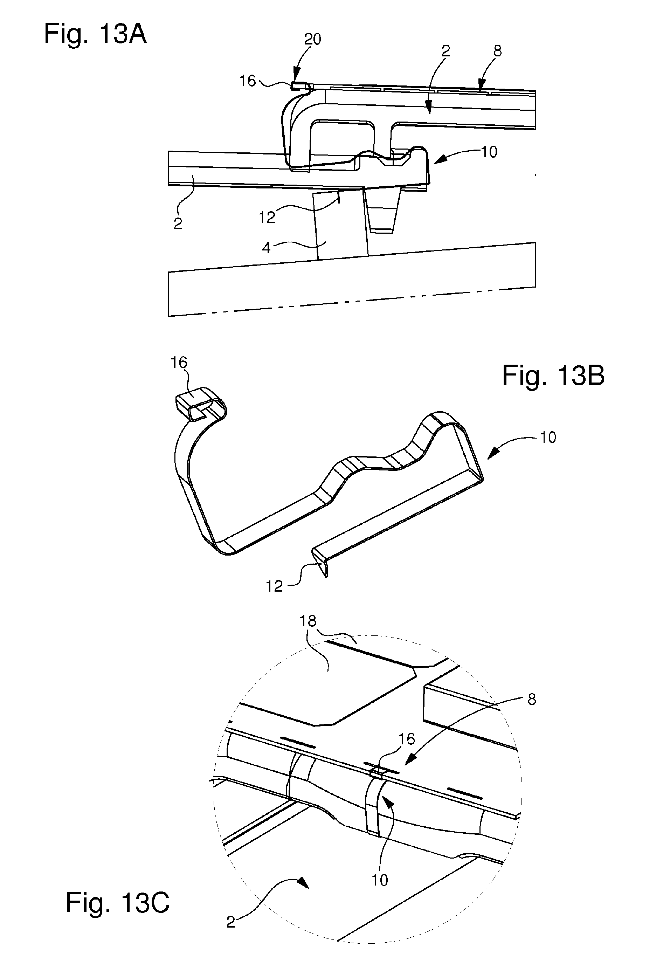

La figure 13A est une vue à plus grande échelle de la zone entourée d'un cercle repéré par la référence 13A sur la figure 10. La figure 13B est une vue en perspective illustrant le profil de la bande de fixation représentée en coupe à la figure 13A. Enfin, la figure 13C est une vue de détail en perspective illustrant la fixation du panneau solaire au moyen d'une bande de fixation dans la zone correspondant à la vue en coupe de la figure 13A.

A la figure 13A, une première tuile 2 est mise en place sur le linteau 4 et une seconde tuile est disposée par-dessus la première tuile 2, chevauchant partiellement la première tuile 2. La bande de fixation 10 est taillée en pointe à l'une de ses extrémités 12 puis recourbée sensiblement à 90° et enfoncée dans le linteau 4. La première tuile 2 recouvre partiellement la bande de fixation 10. Toutefois, la longueur de la bande de fixation 10 est telle qu'elle peut être successivement recourbée par-dessus la première tuile 2 puis par-dessus la deuxième tuile avant d'être enfilée dans une fente 20 prévue à cet effet dans le panneau solaire 8 posé sur la seconde tuile. Finalement, la bande de fixation 10 est à nouveau recourbée par-dessus le panneau solaire 8 pour la fixation de ce dernier. L'opération est renouvelée à quelques fentes de distance.

Ainsi, en considérant trois panneaux solaires s'étendant parallèlement entre eux, à savoir un premier panneau solaire 8 situé le plus bas dans la pente de la toiture, un troisième panneau solaire 8" situé le plus proche du faîte du toit, et un deuxième panneau solaire 8' situé entre les premier et troisième panneaux solaires, on observe les situations suivantes (voir figure 10):
- le premier panneau solaire 8 est fixé par son bord longitudinal inférieur 22 au moyen de bandes de fixation 10 qui sont recourbées par-dessus les tuiles situées sous celles qui supportent le premier panneau solaire 8, les bandes de fixation 10 étant pliées une seconde fois par-dessus les tuiles qui portent le premier panneau solaire 8, puis finalement introduites dans les fentes 20 du premier panneau solaire 8 qui s'étendent le long du bord longitudinal inférieur 22 du premier panneau solaire 8, les bandes de fixation 10 étant finalement recourbées une dernière fois par-dessus le premier panneau solaire 8 pour la fixation de celui-ci;
- le bord longitudinal supérieur 24 du premier panneau solaire 8 et le bord longitudinal inférieur 26 du deuxième panneau solaire 8' sont fixés ensemble au moyen de bandes de fixation 10 communes qui passent successivement sous les premières tuiles qui portent le premier panneau solaire 8, puis par-dessus ces premières tuiles, puis qui sont enfilées dans des fentes 20 pratiquées dans le bord longitudinal supérieur 24 du premier panneau solaire 8, les bandes de fixation 10 étant ensuite recourbées par-dessus les deuxièmes tuiles puis finalement introduites dans les fentes 20 qui s'étendent le long du bord longitudinal inférieur 26 du deuxième panneau solaire 8' et recourbées pour assurer la fixation du deuxième panneau solaire 8';
- le bord longitudinal supérieur 28 du deuxième panneau solaire 8' et le bord longitudinal inférieur 30 du troisième panneau solaire 8" sont assemblés de la même façon que le bord longitudinal supérieur 24 du premier panneau solaire 8 et le bord longitudinal inférieur 26 du deuxième panneau solaire 8', et
- le bord longitudinal supérieur 32 du troisième panneau solaire 8" le plus proche du faîte du toit est fixé au moyen de bandes de fixation 10 qui, après être passées sous les troisièmes tuiles qui supportent les troisièmes panneaux solaires 8", sont recourbées par-dessus les troisièmes tuiles puis enfilées dans les fentes 20 qui s'étendent le long du bord longitudinal supérieur 32 du troisième panneau solaire 8" et finalement recourbées par-dessus les troisièmes panneaux solaires 8" pour la fixation de ces derniers.

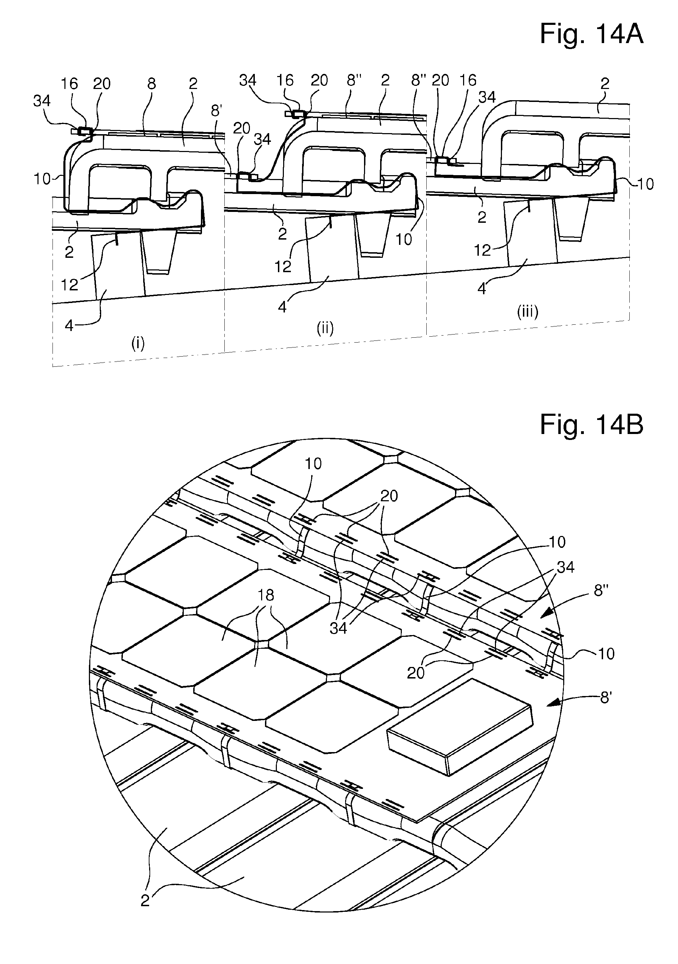

Les figures 14A(i), (ii) et (iii) sont des vues identiques aux figures 11 A, 12A et 13A discutées ci-dessus exception faite de secondes fentes 34 qui sont ménagées dans les panneaux solaires 8, 8' et 8" parallèlement et en regard des premières fentes 20. Ainsi, les bandes de fixation 10 sont passées par leur extrémité libre 16 à travers les premières fentes 20, puis recourbées par-dessus les panneaux solaires et engagées dans les secondes fentes 34. Finalement, les bandes de fixation 10 sont recourbées sous les panneaux solaires. On comprendra que la présence des secondes fentes 34 améliore encore davantage la fixation des panneaux solaires sur la toiture de l'habitation.

La figure 14B correspond à une vue en perspective de la situation illustrée à la figure 14A(ii). On voit que les bandes de fixation 10 sont passées à travers les premières fentes 20 des panneaux solaires 8' puis recourbées par-dessus les panneaux solaires 8' avant d'être engagées dans les secondes fentes 34 de ces mêmes panneaux. Les mêmes bandes de fixation 10 sont utilisées pour immobiliser les panneaux solaires 8" posés sur une rangée de tuiles qui chevauchent les tuiles sur lesquelles sont posés les panneaux solaires 8'. A cet effet, les bandes de fixation sont passées dans les premières fentes 20 des panneaux solaires 8", puis recourbées par-dessus ces panneaux solaires 8" et enfin enfilées dans les secondes fentes 34 de ces mêmes panneaux solaires 8" avant d'être recourbées une dernière fois sous ces panneaux 8".

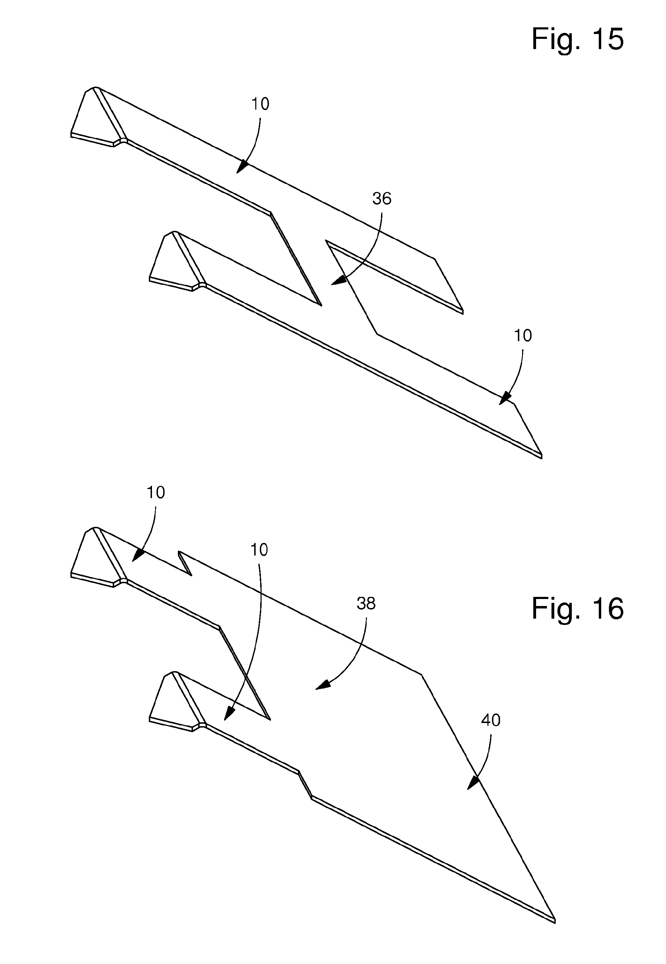

Il va de soi que la présente invention n'est pas limitée aux modes de réalisation qui viennent d'être décrits et que diverses modifications et variantes simples peuvent être envisagées par l'homme du métier sans sortir du cadre de l'invention telle que définie par les revendications annexées. On peut en particulier envisager de réaliser le moyen de fixation par découpe dans un flanc métallique de deux bandes de fixation 10 s'étendant parallèlement entre elles et reliées l'une à l'autre d'un seul tenant par une bande transversale 36 (figure 15). Un autre mode de réalisation envisageable est illustré à la figure 16. Un flanc métallique 38 de forme carrée ou rectangulaire est prolongé par deux portions de bandes de fixation 10. Cette pièce 38 est fixée dans la structure porteuse de l'élément de couverture par les extrémités libres repliées 12 des portions de bandes de fixation 10 et est engagée dans une ouverture correspondante pratiquée dans un panneau solaire par son bord transversal arrière 40 opposé aux deux portions de bandes de fixation 10.

## Revendications

1. Procédé de fixation d'au moins un panneau solaire (8) sur une surface d'une bâtisse, ce procédé comprenant les étapes consistant à:
- se munir d'une bande de fixation (10);
- retirer un élément de couverture de la surface de la bâtisse à l'endroit où l'on souhaite fixer la bande de fixation (10);
- fixer une première extrémité (12) de la bande de fixation (10) sur une structure porteuse de l'élément de couverture;
- remettre l'élément de couverture en place par-dessus la bande de fixation (10), la longueur de la bande de fixation (10) étant telle que l'on peut ensuite la recourber pour la faire revenir au-dessus de l'élément de couverture;
- poser le panneau solaire (8) sur l'élément de couverture;
- enfiler une seconde extrémité libre (16) de la bande de fixation (10) dans une première fente (20) du panneau solaire (8) prévue à cet effet;
- recourber la seconde extrémité libre (16) de la bande de fixation (10) par-dessus le panneau solaire (8) pour fixer le panneau solaire (8), et
- répéter, le cas échéant, les opérations ci-dessus autant de fois que l'on souhaite installer des bandes de fixation (10).

2. Procédé selon la revendication 1, **caractérisé en ce que** l'élément de couverture est une tuile (2) qui recouvre la toiture (1) d'une habitation et **en ce que** la structure porteuse est un linteau (4) de la charpente de la toiture (1).

3. Procédé selon la revendication 2, **caractérisé en ce que** la longueur de la bande de fixation (10) est telle que l'on peut la recourber une première fois dans un premier sens pour la faire venir au-dessus de la tuile (2) qui la recouvre partiellement, puis que l'on peut la recourber une seconde fois dans un sens inverse au premier sens pour la faire venir au-dessus d'une seconde tuile (2') qui chevauche la première tuile (2), et que l'on peut enfin enfiler la seconde extrémité libre (16) de la bande de fixation (10) dans la première fente (20) du panneau solaire (8) prévue à cet effet et recourber la seconde extrémité libre (16) de la bande de fixation (10) par-dessus le panneau solaire (8) pour fixer le panneau solaire (8).

4. Procédé selon l'une quelconque des revendications 2 ou 3, **caractérisé en ce que** la longueur de la bande de fixation (10) est telle que l'on peut la courber une première fois dans un premier sens pour la faire venir au-dessus d'une première tuile (2) qui la recouvre partiellement, puis que l'on peut la courber une deuxième fois dans un sens inverse au premier sens en la faisant passer dans la première fente (20) prévue à cet effet d'un premier panneau solaire (8) posé sur la première tuile (2), puis que l'on peut faire venir la bande de fixation (10) par-dessus une seconde tuile (2') qui chevauche la première tuile (2), et que l'on peut enfin recourber la bande de fixation (10) dans un troisième sens identique au premier sens et faire passer la bande de fixation (10) dans une première fente (20) prévue à cet effet d'un second panneau solaire (8') posé sur la seconde tuile (2').

5. Procédé selon l'une quelconque des revendications 2 à 4, **caractérisé en ce qu'**une seconde fente (34) est ménagée parallèlement et en regard de la première fente (20), la bande de fixation (10) étant passée à travers la première fente (20), puis recourbée par-dessus le panneau solaire (8) avant d'être enfilée dans la seconde fente (34).

6. Procédé selon l'une quelconque des revendications 2 à 5, **caractérisé en ce que** la première extrémité (12) de la bande de fixation (10) est taillée en pointe et est fixée dans le linteau (4) par enfoncement.

7. Procédé selon l'une quelconque des revendications 2 à 5, **caractérisé en ce que** la première extrémité (12) de la bande de fixation (10) est fixée dans le linteau (4) par vissage ou agrafage.

8. Installation d'au moins un panneau solaire (8) fixé sur une surface d'une bâtisse, cette installation comprenant au moins une bande de fixation (10) dont une première extrémité (12) est fixée sur une structure porteuse d'un l'élément de couverture, l'élément de couverture recouvrant partiellement la bande de fixation (10), la bande de fixation (10) étant recourbée par une seconde extrémité libre (16) pour venir par-dessus l'élément de couverture, la seconde extrémité libre (16) de la bande de fixation (10) traversant ensuite une fente (20) prévue à cet effet dans le panneau solaire (8) posé sur l'élément de couverture et étant recourbée pour venir par-dessus le panneau solaire (8) pour immobiliser ledit panneau solaire (8).

9. installation selon la revendication 8, **caractérisée en ce que** l'élément de couverture est une tuile (2) qui recouvre la toiture (1) d'une habitation et **en ce que** la structure porteuse est un linteau (4) de la charpente de la toiture (1).

10. Installation selon la revendication 9, **caractérisée en ce qu'**une seconde fente (34) est ménagée dans le panneau solaire (8) parallèlement et en regard de la première fente (20), la bande de fixation (10) étant passée à travers la première fente (20), puis recourbée par-dessus le panneau solaire (8) avant d'être enfilée dans la seconde fente (34).

11. Panneau solaire portant à sa surface une pluralité de cellules photovoltaïques (18), au moins une première fente (20) pour le passage d'une bande de fixation (10) étant ménagée le long d'un bord du panneau solaire (8).

12. Panneau solaire selon la revendication 11, **caractérisé en ce qu'**une seconde fente (34) pour le passage de la bande de fixation (10) est ménagée parallèlement et à distance de la première fente (34), entre le bord du panneau solaire et la première fente (20).

13. Bande de fixation d'au moins un panneau solaire (8) posé sur un élément de couverture d'une surface d'une bâtisse, cette bande de fixation (10) comprenant des moyens pour sa fixation sur une structure porteuse de l'élément de couverture à l'endroit où est posé l'élément de couverture supportant le panneau solaire (8) et étant déformable pour s'adapter au profil de l'élément de couverture qu'elle enveloppe partiellement et pour traverser une fente (20) prévue à cet effet dans le panneau solaire (8) afin de fixer ledit panneau solaire (8).

14. Bande de fixation selon la revendication 13, **caractérisée en ce que** l'élément de couverture est une tuile (2) qui recouvre la toiture (1) d'une habitation et **en ce que** la structure porteuse est un linteau (4) de la charpente de la toiture (1).
